(19) Europäisches Patentamt
European Patent Office
Office européen des brevets

(11)  EP 2 541 807 B1

## (12)  EUROPEAN PATENT SPECIFICATION

(45) Date of publication and mention
of the grant of the patent:
**09.08.2017   Bulletin 2017/32**

(51) Int Cl.:
***H04B 10/07*** (2013.01)   ***H04B 10/071*** (2013.01)

(21) Application number: **11305848.1**

(22) Date of filing: **30.06.2011**

(54) **Method of estimating a reflection profile of an optical transmission channel**

Verfahren zur Schätzung eines Reflexionsprofils eines optischen Übertragungskanals

Procédé pour estimer un profil de réflexion d'un canal de transmission optique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.01.2013   Bulletin 2013/01**

(73) Proprietor: **ALCATEL LUCENT**
**92100 Boulogne-Billancourt (FR)**

(72) Inventors:
• **Charlet, Gabriel**
**91300 Massy (FR)**
• **Brindel, Patrick**
**91460 Marcoussis (FR)**

(74) Representative: **Berthier, Karine et al**
**Alcatel-Lucent International**
**148/152, route de la Reine**
**92100 Boulogne-Billancourt (FR)**

(56) References cited:
**US-A- 5 000 568       US-A1- 2007 091 297**
**US-A1- 2009 027 656   US-A1- 2011 013 904**

• **YUVAL BERGER ET AL: "The Twisted Squaring Construction, Trellis Complexity, and Generalized Weights of BCH and QR Codes", IEEE TRANSACTIONS ON INFORMATION THEORY, IEEE PRESS, USA, vol. 42, no. 6, 1 November 1996 (1996-11-01), XP011026646, ISSN: 0018-9448**

**Description**

**Field of the invention**

The invention relates to the field of telecommunications, and in particular to a method of estimating a reflection profile of an optical transmission channel using a measurement of a reflection impulse response.

**Background**

In optical data transmission, digital data may be transmitted by means of an optical transmission signal over an optical transmission channel, such as for example an optical fiber.

For the purpose of detecting impairments of the optical channel, it is a common procedure to estimate a reflection profile of the optical channel using the technique of optical time-domain reflectometry (OTDR). This technique is based on the effect of Rayleigh backscattering.

An optical probe signal is transmitted from one side into the optical channel. A fraction of the optical signal energy is reflected back at a location within the optical channel to this one side, while a remaining fraction continues to propagate through the optical channel. The further the optical signal propagates through the optical channel, the more the optical signal is attenuated and the smaller is the reflected fraction of the optical signal.

For an optical channel with constant transmission properties, the attenuation increases exponentially. Therefore, when using as the optical probe signal an optical pulse and then measuring the backscattered optical signal at the one side, the backscattered signal represents the reflection impulse response. Knowing the propagation speed of the optical signal within the optical channel, the time dependency of the backscattered signal can be translated into a dependency in space along the optical channel, which yields the reflection profile of the optical channel. The reflection profile shows a constant attenuation for an optical channel without impairments. In the case that an impairment, such as a cable break, a cable pinch or a cut-off, is present within the optical channel, this can be observed in the reflection profile as a local change of the attenuation.

Since the backscattered fraction of the optical signal decreases the further away the point in space is at which it was reflected, backscattered signal fractions may only be reliably detected for specific points in space depending on the signal to noise ratio (SNR) of the optical channel. Thus, for a given signal energy of the optical pulse as the optical probe signal and a given SNR of an optical channel, the technique of OTDR may only be used for measuring the reflection impulse response of the optical channel up to a specific length.

Instead of using only a single optical pulse as the optical probe signal, a correlation sequence may be used. Such a correlation sequence is a sequence of pulses. As the correlation sequence a sequence may be chosen, whose auto correlation function approximates the dirac delta function.

After transmitting the correlation sequence into the optical channel, the reflected optical signal is measured. Since the auto correlation function of the correlation sequence approximates the dirac delta function, the reflection impulse response of the optical channel can be measured, by correlating the measured reflected optical signal with the correlation sequence itself. Using the propagation speed of the signal, the reflection profile can be estimated from the measured reflection impulse response. Using such a correlation technique, the length, up to which the reflection profile of the optical channel can be estimated, may be increased.

To summarize the above, a reflection profile of an optical transmission channel may be estimated, by measuring a reflection impulse response of the optical channel.

The document US 5,000,568 discloses a method of spread spectrum optical time domain reflectometer measurement, in which multiple complementary Golay sequences are transmitted as partial unipolar sequences.

**Summary**

It is an objective of the invention to improve the known methods for estimating a reflection profile.

Proposed is a method of estimating a reflection profile using a measurement of a reflection impulse response of an optical transmission channel. The method comprises different steps.

The reflection impulse response of the optical channel is measured, by transmitting into the optical transmission channel a first Golay correlation sequence in the form of first consecutive unipolar sequences, and a second Golay correlation sequence, which is complementary to the first Golay correlation sequence, in the form of second consecutive unipolar sequences.

Furthermore, the first consecutive unipolar sequences are transmitted in reversed order into the optical transmission channel, and the second consecutive unipolar sequences are transmitted in reversed order into the optical transmission channel.

For gaining insight into the advantages of the proposed method, the following aspects have to be considered.

A possible choice for a correlation sequence used as a probe signal is a set of complementary Golay sequences.

Golay sequences are bipolar sequences. Optical signals allow only to transmit unipolar signals but not bipolar signals. Therefore, a bipolar Golay sequence may be decomposed into two unipolar sequences, wherein a linear superposition of these unipolar sequences yields the bipolar Golay sequence. The unipolar sequences are transmitted consecutively one after another into the optical transmission channel. For each unipolar sequence, a respective optical response signal is measured and sampled to yield respective response sequences. The response sequences are superposed and then correlated with the corresponding Golay sequence to yield a correlation result.

An autocorrelation function of a Golay sequence is not exactly equal to the dirac delta function, but only approximates the dirac delta function. Therefore, the previously described measurement of the reflection impulse response is not perfect.

For one first Golay sequence, a complementary second Golay sequence may be found, such that a sum of the respective autocorrelation functions add up to a dirac delta function. Thus, for further improving this estimate, a second Golay sequence, which is complementary to the first Golay sequence, is transmitted into the optical transmission channel in the form of respective consecutive unipolar sequences. By superposing the correlation result of the first Golay sequence with the correlation result of the second Golay sequence, one yields an improved measurement of the reflection impulse response.

It has been observed, that an even higher accuracy of measured reflection impulse response can be obtained, by

- transmitting the consecutive unipolar sequences forming the Golay sequences into the optical channel not only once consecutively in one order but also once more in reverse order
- and then estimating the reflection impulse response, by averaging over the measurement results obtained from the optical response signals of the different transmissions.

A higher accuracy of the measured reflection impulse may then lead to an estimated reflection profile of higher accuracy. This may be especially the case for sections of the optical channel, which are within a great distance from the point of transmission and measurement, and therefore reflect back only a reflected optical signal that is of low power.

A further aspect is, that the unipolar sequences do not all have a constant bias, but a bias that varies over time. Therefore, by sending the unipolar sequences in alternating orders, the overall bias influence of the transmitted sequences onto components of the optical channel is averaged. This help to achieve a higher accuracy of the estimated reflection profile.

**Brief description of the Figures**

Figure 1 shows steps of estimating a reflection profile using transmitted sequences.

Figure 2 shows steps of estimating a reflection profile using transmitted sequences according to a further embodiment.

Figure 3 shows steps of transmitting inverse sequences at different wavelengths.

Figure 4 shows values of estimated reflection profiles.

Figure 5 shows a device for estimating a reflection profile using transmitted sequences.

Figure 6 shows a device for estimating a reflection profile using transmitted sequences according to a further embodiment.

**Description of embodiments**

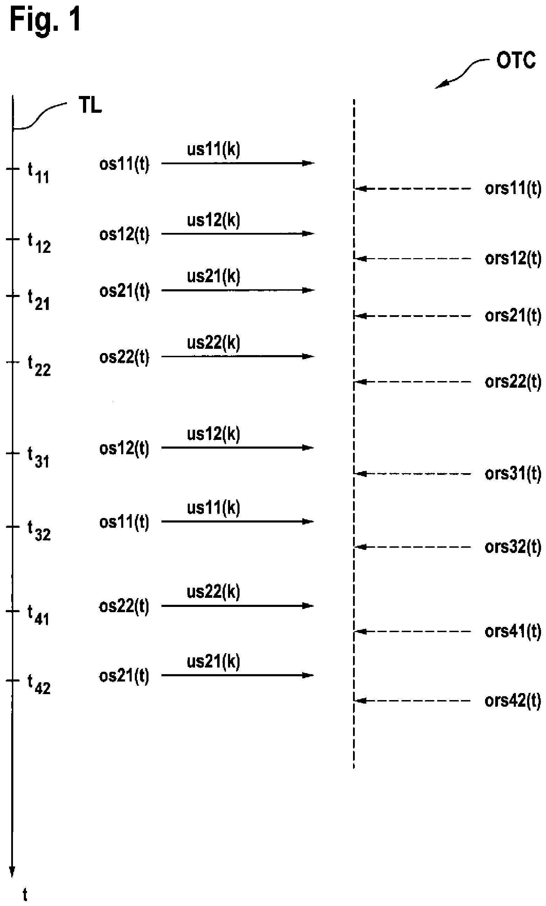

Figure 1 shows a flowchart FC with different steps for estimating a reflection profile. The different steps are carried out consecutively, as indicated by a timeline TL in the flowchart FC.

At a time t11, an optical signal os11(t) is transmitted into an optical transmission channel OTC. The signal os11(t) carries a unipolar sequence us11(k). A unipolar sequence is a time-discrete sequence of binary values occurring at consecutive sampling instances, wherein the binary values are from a set of values as {0, 1}.

An optical response signal ors11(t) is measured as the reflective response of the optical channel OTC to the signal os11(t). This measurement is performed at the same side of the optical channel OTC, at which the signal os11(t) is transmitted into the optical channel OTC.

Furthermore, at a time t12, an optical signal os12(t) is transmitted into the optical transmission channel OTC. The signal os12(t) carries a unipolar sequence us12(k). An optical response signal ors12(t) is measured as the reflective response of the optical channel OTC to the signal os12(t).

The time-discrete unipolar sequences us11(k) and us12(k) consist of binary values {0,1}. A linear superposition of these unipolar sequences us11(k), us12(k) yields a bipolar Golay correlation sequence gs1(k). In detail, this superposition may be carried out as

$$gs_1(k) = us_{11}(k) - us_{12}(k) \quad , \text{with} \quad gs_1(k) \in \{+1, -1\} \ .$$

Having the Golay sequence gs1(k) at hand, the sequence us11(k) may be determined as

$$us_{11}(k) = \frac{1}{2}(1 + gs_1(k)) \quad ,$$

while the sequence us12(k) may be determined as

$$us_{12}(k) = \frac{1}{2}(1 - gs_1(k)) \quad .$$

The reflection impulse response of the optical channel may be denoted as

$$h_{OTC}(k).$$

The measured optical response signals ors11(t) and ors12(t) are sampled, which yields respective time-discrete, binary response sequences rs11(k) and rs12(k). These response sequences rs11(k) and rs12(k) can be written as

$$rs_{11}(k) = h_{OTC}(k) * us_{11}(k) \quad ,$$

$$rs_{12}(k) = h_{OTC}(k) * us_{12}(k) \quad .$$

These response sequences rs11(k) and rs12(k) may be superposed in the same way as their corresponding unipolar sequences us11(k) and us12(k),

$$rs_1(k) = rs_{11}(k) - rs_{12}(k) \ .$$

This yields a superposed response sequence rs1(k)

$$\begin{aligned} rs_1(k) &= rs_{11}(k) - rs_{12}(k) \\ &= h_{OTC}(k) * us_{11}(k) - h_{OTC} * us_{12}(k) \\ &= h_{OTC}(k) * (us_{11}(k) - us_{12}(k)) \\ &= h_{OTC}(k) * gs_1(k) \end{aligned} \quad ,$$

which is a correlation of the reflection impulse response $h_{OTC}(k)$ with the Golay sequence gs1(k).

By correlating the superposed response sequence rs1(k) with the corresponding Golay sequence gs1(k), one yields a correlation sequence cs1(k) as

$$cs_1(k) = rs_1(k) * gs_1(k)$$
$$= h_{OTC}(k) * gs_1(k) * gs_1(k)$$
$$= h_{OTC}(k) * \Psi_{gs1}(k) \quad ,$$

wherein $\Psi_{gs1}(k)$ is the autocorrelation-function of the Golay sequence gs1(k).

At a time t21, an optical signal os21(t) is transmitted into the optical transmission channel OTC. The signal os21(t) carries a unipolar sequence us21(k). An optical response signal ors21(t) is measured as the reflective response of the optical channel OTC to the signal os21(t).

At a time t22, an optical signal os22(t) is transmitted into the optical transmission channel OTC. The signal os22(t) carries a unipolar sequence us22(k). An optical response signal ors22(t) is measured as the reflective response of the optical channel OTC to the signal os12(t).

The time-discrete unipolar sequences us21(k) and us22(k) consist of binary values {0,1}. A linear superposition of these unipolar sequences us21 (k), us22(k) yields a bipolar Golay correlation sequence gs2(k). In detail, this superposition may be carried out as

$$gs_2(k) = us_{21}(k) - us_{22}(k) \quad , \text{with} \quad gs_2(k) \in \{+1, -1\} \; .$$

Having the Golay sequence gs2(k) at hand, the sequence us21(k) may be determined as

$$us_{21}(k) = \frac{1}{2}(1 + gs_2(k)) \quad ,$$

while the sequence us22(k) may be determined as

$$us_{22}(k) = \frac{1}{2}(1 - gs_2(k)) \quad .$$

The measured optical response signals ors21(t) and ors22(t) are sampled, which yields respective time-discrete, binary response sequences rs21(k) and rs22(k). These response sequences rs21(k) and rs22(k) can be written as

$$rs_{21}(k) = h_{OTC}(k) * us_{21}(k) \quad ,$$

$$rs_{22}(k) = h_{OTC}(k) * us_{22}(k) \quad .$$

These response sequences rs21(k) and rs22(k) may be superposed in the same way as their corresponding unipolar sequences us21(k) and us22(k),

$$rs_2(k) = rs_{21}(k) - rs_{22}(k) \; .$$

This yields a superposed response sequence rs2(k)

$$rs_2(k) = rs_{21}(k) - rs_{22}(k)$$
$$= h_{OTC} * us_{21}(k) - h_{OTC} * us_{22}(k)$$
$$= h_{OTC} * (us_{21}(k) - us_{22}(k))$$
$$= h_{OTC} * gs_2(k) \quad ,$$

which is a correlation of the reflection impulse response $h_{OTC}(k)$ with the Golay sequence gs2(k).

By correlating the superposed response sequence rs2(k) with the corresponding Golay sequence gs2(k), one yields a correlation sequence cs2(k) as

$$
\begin{aligned}
cs_2(k) &= rs_2(k) * gs_2(k) \\
&= h_{OTC}(k) * gs_2(k) * gs_2(k) \\
&= h_{OTC}(k) * \Psi_{gs2}(k)
\end{aligned}
\quad,
$$

wherein $\Psi_{gs2}(k)$ is the autocorrelation-function of the Golay sequence gs2(k).

The sum of the autocorrelation-functions $\Psi_{gs1}(k)$ and $\Psi_{gs2}(k)$ of the complementary Golay sequences gs1(k) and gs2(k) is a dirac delta function $\delta(k)$,

$$
\Psi_{gs1}(k) + \Psi_{gs2}(k) = \delta(k).
$$

Therefore, by summing the correlation sequences cs1(k) and cs2(k), one yields a measured reflection impulse response rir1(T) of the optical channel as

$$
\begin{aligned}
rir_1(T) &= cs_1(k) + cs_2(k) \\
&= h_{OTC}(k) * \Psi_{gs1}(k) + h_{OTC}(k) * \Psi_{gs2}(k) \\
&= h_{OTC}(k) * (\Psi_{gs1}(k) + \Psi_{gs2}(k)) \\
&= h_{OTC}(k) * \delta(k) \\
&= h_{OTC}(k)
\end{aligned}
$$

To summarize the above, a measured reflection impulse response rir1(T) is determined, by transmitting into the optical channel OTC

- a first Golay sequence in the form first consecutive unipolar sequences us11(k) and us12(k) in a first order,
- and by furthermore transmitting a second Golay sequence in the form of second consecutive unipolar sequences us21 (k) and us22(k) in a second order.

Furthermore, as it will be described in detail further on, a further reflection impulse response rir2(T) is determined, by transmitting into the optical channel OTC

- the first Golay sequence in the form of the first consecutive unipolar sequences us11(k) and us12(k) in an order that is reverse to the first order,
- and by furthermore transmitting the second Golay sequence in the form of the second consecutive unipolar sequences us21(k) and us22(k) in an order that is reverse to the second order.

At a time t31, the optical signal os12(t), which carries the unipolar sequence us12(k), is transmitted into the optical transmission channel OTC. Furthermore, at a time t32, the optical signal os11(t), which carries the unipolar sequence us11(k), is transmitted into the optical transmission channel OTC.

At a time t41, the optical signal os22(t), which carries the unipolar sequence us22(k), is transmitted into the optical transmission channel OTC. Furthermore, at a time t42, the optical signal os21(t), which carries the unipolar sequence us21 (k), is transmitted into the optical transmission channel OTC.

For each of the transmitted sequences us12(k), us11(k), us22(k), us21(k), a respective optical response signal ors31(t), ors32(t), ors41(t), ors42(t) are measured and sampled, as previously outlined in detail with regard to the measurement of the first reflection impulse response rir1(T). Furthermore, using response sequences sampled from the optical response signal ors31(t), ors32(t), ors41(t), ors42(t), a further measured reflection impulse response rir2(T) is determined, in a way that is analogue to that of determining the reflection impulse response rir1(T) as previously described above.

The measured reflection impulse responses rir1(T) and rir2(T) are then averaged, to yield an average measured reflection impulse response rir(T). This may be carried out in detail as

$$rir(T) = \frac{1}{2}\left(rir_1(T) + rir_1(T)\right) \quad .$$

An estimated reflection profile rp(x) may then be determined, using the average measured reflection impulse response rir(T) and a predetermined propagation speed value v_prop of the optical signals within the optical channel OTC, wherein x is the variable indicating a distance from the point of measurement to that point, at which the attenuation within the optical channel takes on the indicated value of the reflection profile. The estimated reflection profile rp(x) may be determined in detail as

$$rp(x) = \frac{rir(T)}{v_{prop}} \quad .$$

To summarize the above, the estimation of the reflection impulse response rir(T) is carried out within one cycle, by

- transmitting into the optical channel OTC

  o a first Golay sequence in the form of first consecutive unipolar sequences us11(k) and us12(k) in a first order,
  o a second Golay sequence in the form of second consecutive unipolar sequences us21(k) and us22(k) in a second order

- superposing the measured response sequences corresponding to a Golay sequence,
- correlating the superposed response sequences with the respective corresponding Golay sequences,
- superposing the correlation results to obtain a first measured reflection impulse response rir1(T),
- transmitting into the optical channel OTC within

  o the first Golay sequence in the form of the first consecutive unipolar sequences us11(k) and us12(k) in an order that is reverse to the first order,
  o the second Golay sequence in the form of the second consecutive unipolar sequences us21(k) and us22(k) in an order that is reverse to the second order,

- superposing the measured response sequences corresponding to a Golay sequence,
- correlating the superposed response sequences with the respective corresponding Golay sequences,
- superposing the correlation results to obtain a second measured reflection impulse response rir2(T),

and finally

- averaging over the reflection impulse responses rir1(T), rir2(T) measured within the cycle.

The sampling rate of the unipolar sequenced is preferably within the range of 25 kHz up to 250 kHz. The length L of the unipolar sequences is preferably $L=2^{12}=4096$.

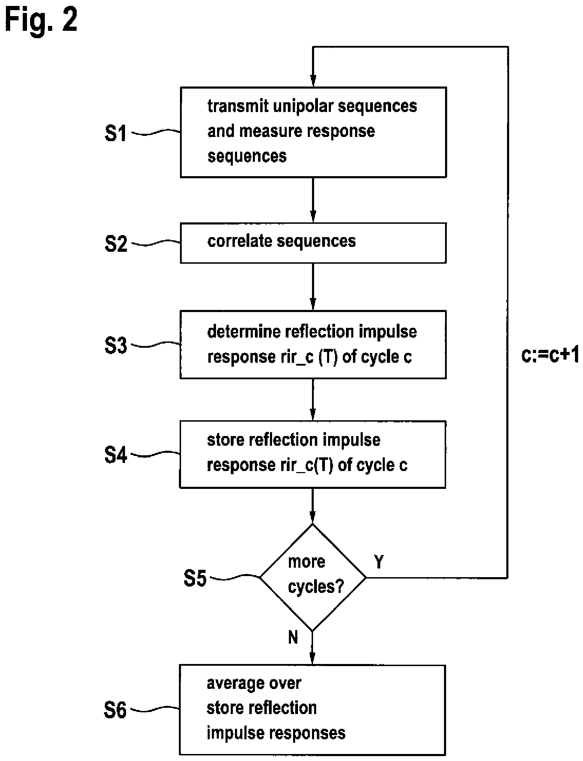

Figure 2 shows a flow chart FC2, which illustrates the steps for estimating a reflection impulse response, as already described with regard to Figure 1, as well as further possible iterations.

Within a step S1, unipolar sequences of one cycle are transmitted and respective response sequences are measured.

Within a step S2, the measured response sequences are superposed and correlated with the respective Golay sequences, as previously described above.

Within a step S3, a measured reflection impulse response rir_c(T), with cycle index c, is determined for the cycle c, as previously described above.

Within a step S4, the measured reflection impulse response rir_c(T) of the cycle is stored.

Within a step S5, it is decided whether a further cycle of measuring a reflection impulse response shall be undergone or not. If it is decided, that a further cycle of measuring a reflection impulse response shall be undergone, the steps S1 to S4 are repeated. If it is decided, that no further cycle shall be undergone, it is proceeded to a step S6.

Within the step S6, the stored measured reflection impulse responses rir_c(T) are averaged, to yield an overall averaged measured reflection impulse response. Using the overall averaged measured reflection impulse response and a predetermined propagation speed value v_prop of the optical signals within the optical channel, a reflection profile of the optical channel is estimated.

With regard to the Figures 1 and 2, a method of estimating a reflection profile of an optical channel has been described, in which within one cycle each of the two Golay sequence gs1(k), gs2(k) is transmitted twice and alternately, and wherein for each transmission of one of the two Golay sequence gs1(k), gs2(k) the order for transmitting the respective unipolar sequences is reversed with respect to the previous transmission of that Golay sequence gs1(k), gs2(k).

According to a further embodiment, each of the two Golay sequence gs1(k), gs2(k) is transmitted four times within one cycle, wherein the Golay sequences gs1(k), gs2(k) are transmitted twice alternately, as described with regard to the Figures 1 and two, starting with one of the Golay sequences gs1(k), gs2(k), and wherein the Golay sequences gs1(k), gs2(k) are furthermore transmitted twice alternately, starting with the other of the Golay sequences gs1(k), gs2(k).

To explain this once more in a concrete example: As described in Figure 1, the Golay sequences are transmitted within one cycle in an order gs1(k), gs2(k), gs1(k), gs2(k), and that for each transmission of one of the two Golay sequence gs1(k), gs2(k) the order for transmitting the respective unipolar sequences is reversed with respect to the previous transmission of that Golay sequence gs1(k), gs2(k). After such a transmission of the Golay sequences within this cycle, as described in Figure 1, a transmission of the Golay sequences in an order gs2(k), gs1(k), gs2(k), gs1(k) is carried out within the same cycle, wherein for each transmission of one of the two Golay sequence gs2(k), gs1(k) the order for transmitting the respective unipolar sequences is reversed with respect to the previous transmission of that Golay sequence gs2(k), gs1(k). The optical response signals of the unipolar sequences are then used to determine an average measured reflection impulse response, as previously described above.

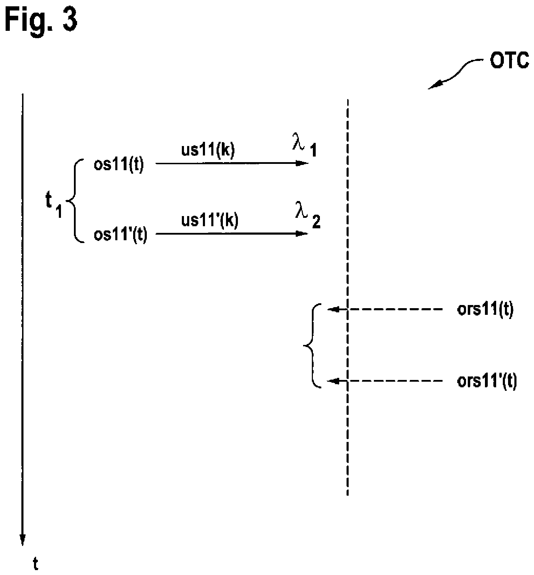

Figure 3 shows steps of transmitting unipolar sequences that are inverse to each other at different wavelengths.

According to Figure 3, the optical signal os11(t), which carries the time-discrete unipolar sequence us11(k), is transmitted at the time instance t11 into the optical channel OTC at a wavelength $\lambda_1$. At the same time instance t11, an optical signal os11'(t) is transmitted into the optical channel OTC at a wavelength $\lambda_2$. The optical signal os11'(t) carries a time-discrete unipolar sequence us11'(k). The unipolar sequence us11'(k) is inverse to the unipolar sequence us11(k), in the sense that the sequence us11'(k) contains

- a value of '0' at those sampling instances at which the unipolar sequence us11(k) contains a value of '1' and
- a value of '1' at those sampling instances at which the unipolar sequence us11(k) contains a value of '0'.

The wavelength $\lambda_1$ has preferably a value of approximately 1500 nm.

The wavelength $\lambda_2$ differs from the wavelength $\lambda_1$ preferably by a wavelength difference $\Delta\lambda = |\lambda_1 - \lambda_2|$ with a value of $\Delta\lambda \leq 1.2$ nm .

The ratio of the wavelength $\lambda_1$ divided by the wavelength difference $\Delta\lambda$ has preferably a value within the range of

$$1000 \leq \frac{\lambda_1}{\Delta\lambda} \leq 3000 .$$

As previously described with regard to Figure 1, the optical response signal ors11(t) is measured as the reflective response of the optical channel OTC to the signal os11(t). This is also shown in Figure 3. Furthermore, Figure 3 shows a reception of an optical response signal ors11'(t), which is a reflective response of the optical channel OTC to the signal os11'(t). Using an optical filter, not shown in Figure 3, the optical response signal ors11'(t) is filtered out. The optical filter possesses a pass-band characteristic for the wavelength $\lambda_1$ and a stop-band characteristic for the wavelength $\lambda_2$. The bandwidth of the pass-band is preferably within the range of 0.2 nm up to 0.7 nm. The optical response signal ors11'(t) is not measured and not sampled. Only the optical response signal ors11(t) is measured, sampled and used for measuring the reflection impulse response of the optical channel OTC.

The advantage of transmitting the inverse unipolar sequence us11'(k) at the wavelength $\lambda_2$ at the same time instance t11 together with the unipolar sequence us11(k) at the wavelength $\lambda_1$ is now described in the following.

An active optical component, such as for example an Erbium Doped Waveguide Amplifier (EDWA), may be an integral part of the optical channel. If only the sequence us11(k) was transmitted at the wavelength $\lambda_1$, then the active optical component would be subject to a signal load at those sampling instances, at which the sequence us11(k) takes on the value '1', but it would be subject to no signal load at those sampling instances, at which the sequence us11(k) takes on the value '0'. Therefore, the active optical component may not act with a constant behaviour for that time span, during which the sequence us11(k) takes on the value '1' and during which the optical signal at the wavelength $\lambda_1$ imposes a signal load. The result may be a distortion of the reflective response signal ors11(t) of the optical channel, which in turn may lead to a distorted measured reflection impulse response.

But, by not only transmitting the sequence us11(k) at the wavelength $\lambda_1$, but also the sequence us11'(k) at the wavelength $\lambda_2$, which differs only slightly from the wavelength $\lambda_1$, an optical component is subject to a constant signal load within a narrow bandwidth $\Delta\lambda = |\lambda_1 - \lambda_2|$. This may lead to a constant behaviour of the optical component for those time spans, during which the sequence us11(k) takes on the value '1'. The result may be a reduction the distortion of the reflective response signal ors11(t) of the optical channel, which in turn may lead to a less distorted measured reflection impulse response.

As described with regard to Figure 3, the inverse unipolar sequence us11'(k) is transmitted by means of the optical signal os11'(t) into the optical channel OTC at the wavelength $\lambda_2$ at that time instance t11, at which the unipolar sequence us11(k) is transmitted by means of the optical signal os11(t) into the optical channel OTC at the wavelength $\lambda_1$. For the further time instances t12, t21, t22, t31, t32, t41, t42 shown in Figure 1, respective inverse sequences us12'(k), us21'(k), us22'(k), us12'(k), us11'(k), us22'(k), us21'(k) may be transmitted at the wavelength $\lambda_2$. Furthermore, reflective responses of the optical channel OTC to the sequences us12'(k), us21'(k), us22'(k), us12'(k), us11'(k), us22'(k), us21'(k) may be filtered out, as previously described above in detail.

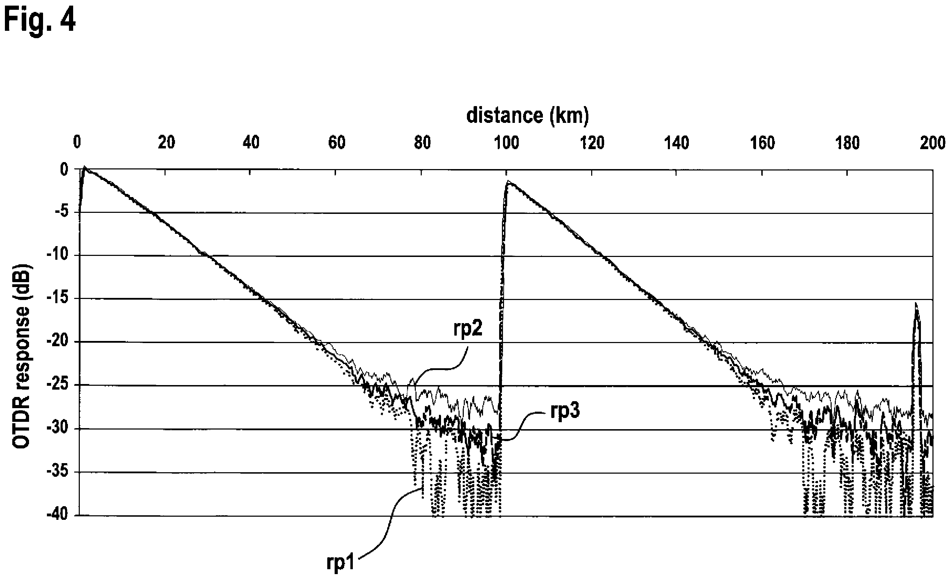

Figure 4 shows different measurement results. Depicted are three different estimations rp1, rp2, rp3 of a reflection profile of a same optical channel. The estimated reflection profiles rp1, rp2, rp3 are plotted in dB values over the distance of the optical channel given in kilometres (km).

The estimated reflection profile rp1 was determined, using within one cycle two Golay sequences, each Golay sequence once, in the form of unipolar sequences consecutively transmitted as us11(k), us12(k), us21(k), us22(k). The estimated reflection profiles rp11 was determined, by averaging over 215209 cycles. The sequences had a length of L=$2^{12}$=4096.

The estimated reflection profile rp2 was determined, using within one cycle two Golay sequences, each Golay sequence once, in the form of unipolar sequences consecutively transmitted as us12(k), us11(k), us22(k), us21(k). The estimated reflection profiles rp1 was determined, by averaging over 215209 cycles. The sequences had a length of L=$2^{12}$=4096.

The estimated reflection profile rp3 was determined, using within one cycle two Golay sequences, each Golay sequence twice within one cycle as proposed by the new method, in the form of unipolar sequences consecutively transmitted as us11(k), us12(k), us21(k), us22(k), us12(k), us11(k), us22(k), us21(k). The estimated reflection profiles rp1 was determined, by averaging over 106640 cycles. The sequences had a length of L=$2^{12}$=4096.

Comparing the estimated reflection profile rp3 with the estimated reflection profiles rp1 and rp2, it becomes evident, that the estimated reflection profile rp3 shows a better approximation of a constant attenuation over the distance, as it would be expected from the optical channel. Thus, the proposed method clearly is able to yield more reliable estimates of a reflection profile, by transmitting each Golay sequence twice within one cycle but with reverse orders for the respective unipolar sequences.

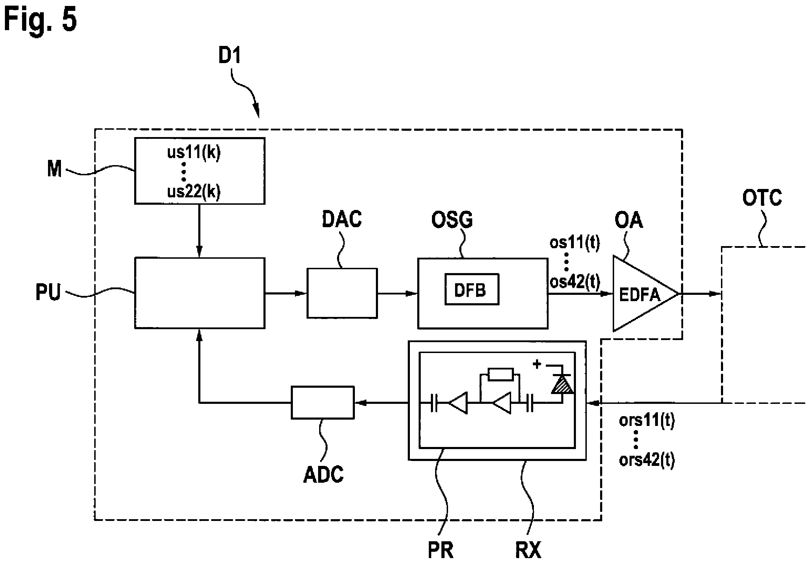

Figure 5 shows a device D1 for estimating a reflection profile using transmitted sequences.

The device D1 contains a processing unit PU, preferably in the form of a Digital Signal Processor (DSP) or a Field Programmable Gate Array (FPGA) for carrying out the different calculation steps previously described above..

Furthermore, the device D1 contains preferably a separate memory device M, which provides the unipolar sequences us11(k), ... , us22(k). Alternatively, the device D1 does not contain a separate memory device M for providing the sequences us11(k), ... , us22(k) but a memory element that is an integral part of the processing unit PU.

The processing unit PU transmits the unipolar sequences us11(k), ... , us22(k) to a digital analogue converter DAC, as previously described above. The digital analogue converter DAC generates from the unipolar sequences us11(k), ... , us22(k) respective analogue electrical signals. These electrical signals drive an optical signal generator OSG to generate the optical signals os11(t), ..., os42(t), which carry the unipolar sequences us11(k), ... , us22(k), at a wavelength $\lambda_1$.

The optical signal generator OSG is preferably a laser, such as a distributed feedback laser DFB. The optical signals os11(t), ..., os42(t) are preferably amplified by an optical amplifier OA, such as an EDFA. Finally, the unipolar sequences us11(k), ... , us22(k) are transmitted in the form of the optical signals os11(t), ..., os42(t) into the optical transmission channel OTC.

The device D1 contains a receiving unit RX for measuring optical response signals ors11(t), ..., ors42(t). The receiving unit RX converts the optical response signals ors11(t), ..., ors42(t) to respective electrical signals. Preferably, the receiving unit RX is a photoreceiver PR.

The receiving unit RX forwards the generated respective electrical signals to an analogue digital converter ADC, which samples the generated respective electrical signals and provides corresponding response sequences to the processing unit PU, as previously described above.

The processing unit PU measures a reflection impulse response as previously described above. Furthermore, using the measured reflection impulse response and a predetermined propagation speed value, the processing unit PU estimates a reflection profile of the optical transmission channel OTC, as previously described above. The predetermined propagation speed value is preferably provided by the memory device M or alternatively stored within the processing unit PU. The processing unit PU is furthermore adapted to carry out further steps previously described with regard to the Figures 1 to 3.

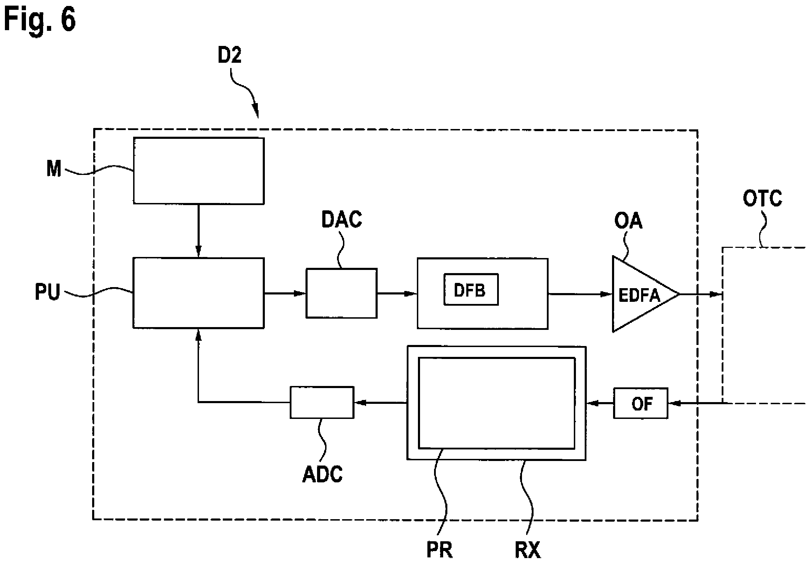

Figure 6 shows a device D2 for estimating a reflection profile using transmitted sequences according to a further embodiment.

The device D2 contains all elements of the device D1 as described previously described with regards to Figure 5. Furthermore, the device is adapted to generate optical signals carrying inverse unipolar sequences at a wavelength $\lambda_2$. The device D2 contains an optical filter OF, which filters out optical response signal as responses of the optical channel OTC to the optical signals carrying the inverse unipolar sequences at the wavelength $\lambda_2$. The optical filter OF possesses a pass-band characteristic for the wavelength $\lambda_1$ and a stop-band characteristic for the wavelength $\lambda_2$. The bandwidth of the pass-band is preferably within the range of 0.2 nm up to 0.7 nm.

The functions of the various elements shown in the Figures 5 and 6, including any functional blocks labelled as "device", "unit" or "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. It should be appreciated by those skilled in the art that any block diagrams herein represent conceptual views of illustrative circuitry embodying the principles of the invention.

## Claims

1. Method of estimating a reflection profile of an optical transmission channel using a measurement of a reflection impulse response, comprising
   measuring said reflection impulse response of said optical channel (OTC), by determining a first reflection impulse response, by

   - transmitting into said optical transmission channel

     ◦ a first Golay correlation sequence, in the form of first consecutive unipolar sequences (us11(k), us12(k)), in a first order, and
     ◦ a second Golay correlation sequence, which is complementary to said first Golay correlation sequence, in the form of second consecutive unipolar sequences (us21 (k), us22(k)), in a second order,

   **characterized**

   **by** determining a second reflection impulse response, by

   - transmitting into said optical transmission channel (OTC)

     ◦ said first consecutive unipolar sequences (us11(k), us12(k)) in an order that is reverse to said first order,
     ◦ and said second consecutive unipolar sequences (us21(k), us22(k)) in an order that is reverse to said second order,

   and by averaging said first reflection impulse response and said second reflection impulse response, wherein said method comprises furthermore

   - measuring for the transmitted unipolar sequences (us11(k), us12(k), us21 (k), us22(k)) respective response sequences, and
   - determining said reflection impulse response, using said respective response sequences and said Golay sequences.

2. Method according to claim 1, comprising furthermore measuring respective reflection impulse responses of said optical channel (OTC) within respective cycles, by transmitting into said optical channel (OTC) within each cycle consecutively

   - said first consecutive unipolar sequences (us11(k), us12(k)) twice but with alternating orders,
   - and said second consecutive unipolar sequences (us21 (k), us22(k)) twice but with alternating orders,

   and determining an overall reflection impulse response, by averaging over the measured reflection impulse responses.

3. Method according to any of the claims 1 or 2, comprising furthermore transmitting simultaneously

   - said unipolar sequences (us11(k), us12(k), us21 (k), us22(k)) using respective optical signals at a first optical wavelength ($\lambda_1$),
   - and respective inverse unipolar sequences (us11'(k), us12'(k), us21'(k), us22'(k)) using respective optical signals at a second optical wavelength ($\lambda_2$), which is different from said first optical wavelength ($\lambda_1$).

4. Device for estimating a reflection profile of an optical transmission channel, wherein said device (D1, D2) is adapted to measure said reflection impulse response of said optical channel (OTC),
   by determining a first reflection impulse response, by

   - transmitting into said optical transmission channel (OTC)

     o a first Golay correlation sequence, in the form of first consecutive unipolar sequences (us11(k), us12(k)), in a first order and
     o a second Golay correlation sequence, which is complementary to said first Golay correlation sequence, in the form of second consecutive unipolar sequences (us21 (k), us22(k)), in a second order, **characterized in that** said device is adapted to determine a second reflection impulse response by

   - transmitting into said optical transmission channel (OTC)

     o said first consecutive unipolar sequences (us11(k), us12(k)) in an order that is reverse to said first order,
     o and said second consecutive unipolar sequences (us21(k), us22(k)) in an order that is reverse to said second order,

   wherein said device is furthermore adapted to average the first reflection impulse response and said second reflective impulse response and wherein said device is furthermore adapted to

   - measure for the transmitted unipolar sequences (us11(k), us12(k), us21 (k), us22(k)) respective response sequences, and
   - determine said reflection impulse response, using said respective response sequences and said Golay sequences.

**Patentansprüche**

1. Verfahren zum Abschätzen eines Reflexionsprofils eines optischen Übermittlungskanals unter Verwendung einer Messung einer Reflexionsimpulsantwort, umfassend:

   das Messen der besagten Reflexionsimpulsantwort besagten optischen Übermittlungskanals (Optical Transmission Channel, OTC) durch das Bestimmen einer ersten Reflexionsimpulsantwort, durch

   - das Übertragen in besagten optischen Übermütlungskana!

     ∘ einer ersten Golaysequenz in Form erster aufeinanderfolgender, unipolarer Sequenzen (us11(k), us12(k)) in einer ersten Reihenfolge, und
     ∘ einer zweiten Golaysequenz, welche komplementär zur ersten Golaysequenz ist, im Form zweiter aufeinanderfolgender, unipolarer Sequenzen (us21(k), us22(k)) in einer zweiten Reihenfolge,

   **gekennzeichnet**
   **durch** das Bestimmen einer zweiten Reflexionsimpulsantwort durch

   - das Übertragen in besagten optischen Übermittlungskanal (OTC)

     ∘ der besagten ersten aufeinanderfolgenden, unipolaren Sequenzen (us11 (k), us12(k)) in einer Reihenfolge, die umgekehrt ist zu der besagten ersten Reihenfolge,

◦ und der besagten zweiten aufeinanderfolgenden, unipolaren Sequenzen (us21(k), us22(k)) in einer Reihenfolge, die umgekehrt ist zu der besagten zweiten Reihenfolge,

und durch das Mitteln der besagten ersten Reflexionsimpulsantwort und der besagten zweiten Reflexionsimpulsantwort,
wobei besagtes Verfahren weiterhin umfasst:

- das Messen entsprechender Antwortsequenzen für die übermittelten unipolaren Sequenzen (us11(k), us12(k), us21(k), us22(k)), und
- das Bestimmen besagter Reflexionsimpulsantwort unter Verwendung der besagten, entsprechenden Antwortsequenzen und der besagten Golaysequenzen.

2. Verfahren nach Anspruch 1, weiterhin umfassend:

das Messen entsprechender Reflexionsimpulsantworten besagten optischen Übermittlungskanals (OTC) im Verlauf entsprechender Zyklen, indem in besagten optischen Übermittlungskanal (OTC) innerhalb eines jeden Zyklus aufeinanderfolgend Folgendes übermittelt wird:

- die besagten ersten aufeinanderfolgenden, unipolaren Sequenzen (us11(k), us12(k)) zweimal, doch in wechselnder Reihenfolge,
- und die besagten zweiten aufeinanderfolgenden, unipolaren Sequenzen (us21(k), us22(k)) zweimal, doch in wechselnder Reihenfolge,

und das Bestimmen einer Gesamt-Reflexionsimpulsantwort durch das Mitteln auf der Grundlage der gemessenen Reflexionsimpulsantworten.

3. Verfahren nach einem jeglichen der Ansprüche 1 oder 2, weiterhin umfassend, simultan zu übermitteln:

- die besagten unipolaren Sequenzen (us11(k), us12(k), us21(k), us22(k)), dazu entsprechende optische Signale mit einer ersten optischen Wellenlänge ($\lambda_1$) verwendend,
- und entsprechende, umgekehrte unipolare Sequenzen (us11'(k), us12'(k), us21'(k), us22'(k)) dazu entsprechende optische Signale mit einer zweiten optischen Wellenlänge ($\lambda_2$) verwendend, welche ungleich der besagten, ersten optischen Wellenlänge ($\lambda_1$) ist.

4. Vorrichtung zum Abschätzen eines Reflexionsprofils eines optischen Üfoermittlungskanals, wobei besagte Vorrichtung (D1, D2) ausgelegt ist für das Messen besagter Reflexionsimpulsantwort besagten optischen Übermittlungskanals (OTC),
durch das Bestimmen einer zweiten Reflexionsimpulsantwort durch

- das Übertragen in besagten optischen Übermittlungskanal (OTC)

◦ einer ersten Golaysequenz in Form erster aufeinanderfolgender, unipolarer Sequenzen (us11(k), us12(k)) in einer ersten Reihenfolge, und
◦ einer zweiten Golaysequenz, welche komplementär zur ersten Golaysequenz ist, im Form zweiter aufeinanderfolgender, unipolarer Sequenzen (us21(k), us22(k)) in einer zweiten Reihenfolge,

**dadurch gekennzeichnet, dass** besagte Vorrichtung ausgelegt ist für das Bestimmen einer zweiten Reflexionsimpulsantwort durch

- das Übertragen in besagten optischen Übermittlungskanal (OTC)

◦ der besagten ersten aufeinanderfolgenden, unipolaren Sequenzen (us11(k), us12(k)) in einer Reihenfolge, die umgekehrt ist zu der besagten ersten Reihenfolge,
◦ und der besagten zweiten aufeinanderfolgenden, unipolaren Sequenzen (us21(k), us22(k)) in einer Reihenfolge, die umgekehrt ist zu der besagten zweiten Reihenfolge,

wobei besagte Vorrichtung weiterhin ausgelegt ist für das Mitteln der ersten Reflexionsimpulsantwort und der zweiten Reflexionsimpulsantwort, und

wobei besagte Vorrichtung weiterhin ausgelegt ist für

- das Messen entsprechender Antwortsequenzen für die übermittelten unipolaren Sequenzen (us11(k), us12(k), us21(k), us22(k)), und
- das Bestimmen besagter Reflexionsimpulsantwort unter Verwendung der besagten, entsprechenden Antwortsequenzen und der besagten Golaysequenzen.

**Revendications**

1. Procédé d'estimation d'un profil de réflexion d'un canal de transmission optique en utilisant une mesure d'une réponse de réflexion d'impulsion, comprenant la mesure de ladite réponse de réflexion d'impulsion dudit canal de transmission optique (OTC), en déterminant une première réponse de réflexion d'impulsion, en

- émettant dans ledit canal de transmission optique

  ∘ une première séquence de corrélation de Golay, sous la forme de premières séquences unipolaires consécutives (us11(k), us12(k)), dans un premier ordre, et
  ∘ une deuxième séquence de corrélation de Golay, qui est complémentaire de ladite première séquence de corrélation de Golay, sous la forme de deuxièmes séquences unipolaires consécutives (us21(k), us22(k)), dans un deuxième ordre,

  **caractérisé**
  **par** la détermination d'une deuxième réponse de réflexion d'impulsion, en

  - émettant dans ledit canal de transmission optique (OTC)

  ∘ lesdites premières séquences unipolaires consécutives (us11(k), us12(k)) dans un ordre qui est inverse audit premier ordre,
  ∘ et lesdites deuxièmes séquences unipolaires consécutives (us21(k), us22(k)) dans un ordre qui est inverse audit deuxième ordre,

  et en calculant la moyenne de ladite première réponse de réflexion d'impulsion et ladite deuxième réponse de réflexion d'impulsion,
  ledit procédé comprenant en outre les étapes suivantes

  - mesurer pour les séquences unipolaires transmises (us11(k), us12(k), us21(k), us22(k)) des séquences de réponse respectives, et
  - déterminer ladite réponse de réflexion d'impulsion, en utilisant lesdites séquences de réponse respectives et lesdites séquences de Golay.

2. Procédé selon la revendication 1, comprenant en outre les étapes suivantes :

  mesurer des réponses de réflexion d'impulsion respectives dudit canal de transmission optique (OTC) dans des cycles respectifs, en émettant dans ledit canal de transmission optique (OTC) à l'intérieur de chaque cycle consécutivement

  - lesdites premières séquences unipolaires consécutives (us11(k), us12(k)) deux fois mais dans des ordres alternatifs,
  - et lesdites deuxièmes séquences unipolaires consécutives (us21(k), us22(k)) deux fois mais dans des ordres alternatifs,

  et déterminer une réponse de réflexion d'impulsion globale, en calculant la moyenne des réponses de réflexion d'impulsion mesurées.

3. Procédé selon l'une quelconque des revendications 1 ou 2, comprenant en outre l'émission simultanée

  - desdites séquences unipolaires (us11(k), us12(k), us21(k), us22(k)) en utilisant des signaux optiques respectifs à une première longueur d'onde optique ($\lambda_1$),

- et de séquences unipolaires inverses respectives (us11'(k), us12'(k), us21'(k), us22'(k)) en utilisant des signaux optiques respectifs à une deuxième longueur d'onde optique ($\lambda_2$), qui est différente de ladite première longueur d'onde optique ($\lambda_1$).

4. Dispositif pour estimer un profil de réflexion d'un canal de transmission optique, ledit dispositif (D1, D2) étant adapté pour mesurer ladite réponse de réflexion d'impulsion dudit canal de transmission optique (OTC), en déterminant une première réponse de réflexion d'impulsion, en

- émettant dans ledit canal de transmission optique (OTC)

◦ une première séquence de corrélation de Golay, sous la forme de premières séquences unipolaires consécutives (us11(k), us12(k)), dans un premier ordre et
◦ une deuxième séquence de corrélation de Golay, qui est complémentaire de ladite première séquence de corrélation de Golay, sous la forme de deuxièmes séquences unipolaires consécutives (us21(k), us22(k)), dans un deuxième ordre,

**caractérisé en ce que** ledit dispositif est adapté pour déterminer une deuxième réponse de réflexion d'impulsion

- en émettant dans ledit canal de transmission optique (OTC)

◦ lesdites premières séquences unipolaires consécutives (us11(k), us12(k)) dans un ordre qui est inverse audit premier ordre,
◦ et lesdites deuxièmes séquences unipolaires consécutives (us21(k), us22(k)) dans un ordre qui est inverse audit deuxième ordre,

ledit dispositif étant en outre adapté pour calculer la moyenne de la première réponse de réflexion d'impulsion et de ladite deuxième réponse de réflexion d'impulsion et
ledit dispositif étant en outre adapté pour

- mesurer pour les séquences unipolaires transmises (us11(k), us12(k), us21(k), us22(k)) des séquences de réponse respectives, et
- déterminer ladite réponse de réflexion d'impulsion, en utilisant lesdites séquences de réponses respectives et lesdites séquences de Golay.

# Fig. 1

# Fig. 2

S1 — transmit unipolar sequences and measure response sequences

S2 — correlate sequences

S3 — determine reflection impulse response rir_c (T) of cycle c

S4 — store reflection impulse response rir_c(T) of cycle c

S5 — more cycles?

Y    c:=c+1

N

S6 — average over store reflection impulse responses

# Fig. 3

Fig. 4

**Fig. 5**

19

Fig. 6

EP 2 541 807 B1

**EP 2 541 807 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5000568 A